# EUROPÄISCHE PATENTANMELDUNG

(11) **EP 4 047 836 A1**
(43) Veröffentlichungstag der Anmeldung: **24.08.2022**
(21) Anmeldenummer: 21157652.5
(22) Anmeldetag: 17.02.2021
(51) Int. Cl.: H04B 10/114, H04B 10/80, H04B 10/85

(54) **SENSORKNOTENNETZWERK ZUR ÜBERTRAGUNG EINER INFORMATION**

(71) Anmelder: Siemens Aktiengesellschaft, 80333 München (DE)
(72) Erfinder: Villnow, Michael, 90765 Fürth (DE)

(57) **Zusammenfassung**

Die Erfindung gibt ein Sensorknotennetzwerk (1) zur Überwachung einer technischen Anlage (2) und/oder eines technischen Gerätes (3) an, aufweisend:
- ein Versorgungsgerät (4), aufweisend eine Lichtquelle (5), wobei die Lichtquelle (5) ausgebildet ist, ein Lichtsignal (6) zu emittieren, wobei das Lichtsignal (6) durch definierte optische Eigenschaften charakterisiert ist, wobei die optischen Eigenschafte eine Information (7) codieren,
- mindestens einen Sensorknoten (8), ausgebildet Daten (9) der technischen Anlage (2) und/oder des technischen Gerätes (3) zu erfassen, wobei der mindestens eine Sensorknoten (8) einen Photodetektor (10) aufweist, wobei der Photodetektor (10) ausgebildet ist, das Lichtsignal (6) zu detektieren,
wobei der mindestens eine Sensorknoten (8) eine Decodierungseinheit (11) aufweist, wobei die Decodierungseinheit (11) ausgebildet ist unter Heranziehen der optischen Eigenschaften des Lichtsignals (6) ein digitales Signal zu erstellen, wobei das digitale Signal eine decodierte Form der Information (7) enthält.

Außerdem gibt die Erfindung ein zugehöriges Verfahren an.

## Beschreibung

### HINTERGRUND DER ERFINDUNG

### Gebiet der Erfindung

Die vorliegende Erfindung betrifft ein Sensorknotennetzwerk zur Überwachung einer technischen Anlage und/oder eines technischen Gerätes. Die Erfindung betrifft außerdem ein zugehöriges Verfahren zur Übertragung einer Information in einem Sensorknotennetzwerk, wobei das Sensorknotennetzwerk eine technische Anlage und/oder ein technisches Gerät überwacht.

### Beschreibung des Stands der Technik

Durch das industrielle Internet der Dinge werden zunehmend hochintegrierte, intelligente Sensorknoten mit drahtloser Kommunikation in verschiedenen technischen Anlagen wie beispielsweise Produktionsanlagen, Kraftwerken und anderen technischen Einrichtungen eingesetzt.

Dabei ergeben sich zwei grundlegende Problemstellungen - die der Energieversorgung und der sicheren Datenkommunikation.

Die Energieversorgung eines Sensorknotens kann auf drei verschiedene Arten gelöst werden:
Die erste Möglichkeit ist eine permanente Energieversorgung. Hierfür muss eine drahtgebundene Energieversorgung bereitgestellt werden. Der Installationsaufwand ist hoch und die Flexibilität des Sensorknotens wird stark reduziert. Ein Einsatz auf Hochspannung oder an Stellen schlechter Zugänglichkeit ist damit nicht möglich. Es existieren Lösungen mit einer glasfasergebundenen Energieversorgung von Geräten auf Hochspannung. Der Installationsaufwand und der Nachweis der Spannungsfestigkeit ist allerdings enorm hoch, so dass diese Lösung nicht bei einfacheren Sensorknoten zum Einsatz kommt.

Die zweite Möglichkeit ist eine Energieversorgung durch Batterieversorgung. Hierbei wird der Sensorknoten über Batterien versorgt. Die Dauer der Energieversorgung aus der Batterie hängt stark von dem Einsatzzweck und der Benutzung des Sensorknotens ab. Eine reale Dauer bis zu einem Batteriewechsel liegt zwischen 12 und 24 Monaten und ist damit für industrielle Einsatzzwecke eher kurz.

Die dritte Möglichkeit ist eine Energieversorgung durch "Energy Harvesting". Für manche Anwendungsfälle lassen sich Energy Harvester einsetzen, die wahlweise eine Solarzelle, eine Schwingungsmasse oder ein Peltier-Element umfassen kann. Ein pauschales Harvesting-Modul ist nicht möglich, da das Harvesting-Modul individuell an die Umgebungsbedingungen angepasst werden muss. Nicht immer ist ausreichend Licht durch die Sonne verfügbar, sind Schwingungen stark genug oder sind Temperaturgradienten ausreichend. Daher eignen sich Harvester nur für Spezialanwendungen, da diese aufgrund des hohen Aufwandes, der Anpassung und Optimierung des Harvesters an die Umgebung, gemieden werden.

Für autark betriebene Sensorknoten werden oft drahtlose Kommunikationsstandards mit geringem Energieverbrauch eingesetzt. Diese sind beispielsweise BLE, Thread, 6LoWPAN, Zigbee, SmartMesh IP, oder manchmal auch WLAN.

Eine zusätzliche Herausforderung ist, dass Sensorknoten mit einer Verbindung an das Internet besonders durch Cyberangriffe gefährdet sind. Durch die Verwendung von Kommunikationsstandards mit geringem Energieverbrauch und optimiertem Datenübertragungsvolumen sind zudem die einsetzbaren Sicherheitsmechanismen beschränkt. Die Sensorknoten sind oft nicht in der Lage, aufwändige Verschlüsselungsalgorithmen anzuwenden oder große Mengen an Daten-Overhead für Authentifizierung zu versenden.

Zudem ist die drahtlose Kommunikationsschnittstelle oft die einzige Schnittstelle des Sensorknotens, so dass eine getrennte Kommunikation für Daten und für sicherheitsrelevante Informationen wie Tokens, Passwörter, Zertifikate oder Authentifizierungsmechanismen nicht möglich ist.

Im Stand der Technik findet eine gesicherte Datenübertragung meist nur durch eine Standard-Verschlüsselung der Kommunikation sowie pre-shared Keys statt. Die übertragenen Daten selbst sind meist nicht verschlüsselt. Eine Authentifizierung wird entweder über Zertifikate, Tokens oder über eindeutige Seriennummern gelöst. Anders als bei Industrie-PCs, bei welchen ein Zertifikat oder ein Token händisch über einen zweiten unabhängigen Weg eingespielt werden muss (z.B. durch einen USB Stick, in welchen der Token zuvor durch einen Benutzer über einen anderen PC manuell heruntergeladen und gespeichert wurde), findet der Austausch von solchen sicherheitsrelevanten Informationen über die selbe drahtlose Kommunikationsschnittstelle statt. Dies stellt ein erhöhtes Sicherheitsrisiko dar.

Die Aufgabe der Erfindung besteht darin, eine Lösung für eine sichere Datenübertragung in einem Sensorknotennetzwerk bereitzustellen. Eine weitere Aufgabe der Erfindung besteht darin, eine Lösung zur gleichzeitigen Energieversorgung des Sensorknotennetzwerkes bzw. der Sensorknoten des Sensorknotennetzwerkes, zusätzlich zu der sicheren Datenübertragung, bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen. Die Erfindung betrifft ein Sensorknotennetzwerk zur Überwachung einer technischen Anlage und/oder eines technischen Gerätes.

Das Sensorknotennetzwerk zur Überwachung einer technischen Anlage und/oder eines technischen Gerätes weist die folgenden Komponenten auf:
- ein Versorgungsgerät, wobei das Versorgungsgerät eine Lichtquelle aufweist, wobei die Lichtquelle ausgebildet ist, ein Lichtsignal zu emittieren, wobei das Lichtsignal durch definierte optische Eigenschaften charakterisiert ist, wobei die optischen Eigenschaften eine Information codieren,
- mindestens einen Sensorknoten, ausgebildet Daten der technischen Anlage und/oder des technischen Gerätes zu erfassen, wobei der mindestens eine Sensorknoten einen Photodetektor aufweist, wobei der Photodetektor ausgebildet ist, das Lichtsignal zu detektieren,
wobei der mindestens eine Sensorknoten eine Decodierungseinheit aufweist, wobei die Decodierungseinheit ausgebildet ist unter Heranziehen der optischen Eigenschaften des Lichtsignals ein digitales Signal zu erstellen, wobei das digitale Signal eine decodierte Form der Information enthält.

Das Lichtsignal kann von dem Versorgungsgerät über Freistrahl oder über eine Lichtleitfaser an einen Sensorknoten übertragen werden kann.

Ein Aspekt der Erfindung besteht darin, ein Sensorknotennetzwerk dessen Komponenten ausgebildet sind, eine in ein Lichtsignal codierte Information zu emittieren, zu detektieren und zu decodieren. Dies kann mit einer Bereitstellung einer unabhängigen drahtlosen Kommunikationsschnittstelle zur 2-Faktor-Authentifizierung verglichen werden.

Es wird u.a. ein Versorgungsgerät mit einer Lichtquelle (beispielsweise eine LED, SLED oder Laserdiode) des Sensorknotens vorgeschlagen. Der Sensorknoten verfügt über einen, an die jeweilige Lichtquelle angepassten Photodetektor.

Das zuvor erwähnte Versorgungsgerät ist insbesondere ausgebildet, auf die Trägerfrequenz des Lichtsignals (insbesondere 1550nm bzw. 193,4 THz) eine Information aufzumodulieren, wodurch Informationen von der Lichtquelle, insbesondere von einer Laserquelle, an den Sensorknoten übertragen werden können. Diese Datenübertragung kann selbst wiederum verschlüsselt sein.

Der Photodetektor sowie die nachgeschaltete Decodierungseinheit sind insbesondere ausgebildet, die optische Modulation auf der Trägerfrequenz zu demodulieren und in ein digitales Signal, insbesondere einen digitalen Datenstrom, umzuwandeln.

Die Kommunikation zwischen dem Versorgungsgerät und dem Sensorknoten ist unidirektional und kann durch eine geeignete Auslegung der Schaltkreise des Versorgungsgeräts und des Sensorknotens physikalisch nicht in die Gegenrichtung verwendet werden. Dies erhöht zusätzlich die Sicherheit des Sensorknotennetzwerks, da ein Sensorknoten über den vorgestellten Kommunikationskanal nicht auf das sicherheitsrelevante System, welches für die Vergabe von Zertifikaten und Tokens ausgebildet ist, aktiv zugreifen kann, sondern über diese Schnittstelle nur Daten von dem sicherheitsrelevanten System über das Versorgungsgerät empfängt.

Damit lassen sich, ähnlich der 2-Faktor-Authentifizierung bei Online-Banking, über eine zweite, unidirektionale Schnittstelle sicherheitsrelevante Informationen (Einmalpasswörter, Tokens, Zertifikate, Netzwerkschlüssel) an den Sensorknoten übertragen.

Da nur das übergeordnete Device Management System weiß, welches Versorgungsgerät mit einem bestimmten Sensorknoten verbunden ist, ist es für Angreifer von außen, beispielsweise durch abhören der drahtlosen Kommunikationsschnittstelle, unmöglich, die Identität des Sensorknotens zu stehlen umso anschließend das Datenbackend anzugreifen.

In einer Weiterbildung der Erfindung ist die technische Anlage als:
- eine Produktionsanlage,
- eine industrielle Anlage,
- ein Energiekraftwerk,
- eine Bearbeitungsanlage oder
- eine Fertigungsanlage
ausgebildet.

Das hat den Vorteil, dass die Erfindung in verschiedenen technischen Anlagen, in welchen durch das industrielle Internet der Dinge zunehmend hochintegrierte, intelligente Sensorknoten mit drahtloser Kommunikation Anwendung finden, eingesetzt werden kann.

In einer weiteren Weiterbildung der Erfindung ist das technische Gerät ein Produktionsmaschine, ein Fertigungsroboter, ein Fahrzeug, ein bildgebendes Gerät, ein Hörgerät oder ein Haushaltsgerät.

Das hat den Vorteil, dass die Erfindung in verschiedenen technischen Geräten, in welchen durch das industrielle Internet der Dinge zunehmend hochintegrierte, intelligente Sensorknoten mit drahtloser Kommunikation Anwendung finden, eingesetzt werden kann.

In einer weiteren Weiterbildung der Erfindung ist das Versorgungsgerät ausgebildet, den mindestens einen Sensorknoten mit optischer Energie zu versorgen.

Dies hat den Vorteil, dass die Erfindung in dieser Weiterbildung sowohl die Probleme der zeitlich begrenzten Energieversorgung mittels einer Batterie und die begrenzte Einsetzbarkeit einer drahtgebundenen Stromversorgung als auch die Bereitstellung einer Möglichkeit zur sicheren Datenübertragung, insbesondere einer unabhängigen drahtlosen Kommunikationsschnittstelle zur 2-Faktor-Authentifizierung, löst.

Hierfür wird das Versorgungsgerät mit der Lichtquelle (insbesondere eine LED, SLED oder Laserdiode) zur Energieversorgung des Sensorknotens vorgeschlagen. Die Wahl der Lichtquelle (emittiertes Wellenlängenspektrum, Energiedichte, Strahlform usw.) kann an die jeweilige Anwendung individuell angepasst werden. So ist insbesondere bei einem dauerhaften Betrieb des Sensorknotens eine leistungsstarke Laserdiode zu verwenden, wohingegen bei einem diskontinuierlichen Betrieb mit geringer Übertragungshäufigkeit von Informationen, insbesondere Daten, auch eine LED verwendet werden kann.

In einer weiteren Weiterbildung der Erfindung weist der mindestens eine Sensorknoten einen Energiespeicher auf. Dies hat den Vorteil, dass die übertragene und empfangene Energie dem Energiespeicher zugeführt werden kann und dort gespeichert werden kann.

In einer weiteren Weiterbildung der Erfindung ist der mindestens eine Sensorknoten ausgebildet die optische Energie in elektrische Energie umzuwandeln. Dies hat den Vorteil, dass elektrische Energie gewonnen wird.

Die Umwandlung der optischen Energie in elektrische Energie kann insbesondere durch den Photodetektor des Sensorknotens erfolgen. Dies hat den Vorteil, dass die Umwandlung der optischen Energie in elektrische Energie direkt im Photodetektor, welcher die optische Energie direkt von dem Versorgungsgerät empfängt, stattfindet. Alternativ kann die Umwandlung der optischen Energie in elektrische Energie in einer nachgeschalteten Einheit erfolgen.

In einer weiteren Weiterbildung der Erfindung ist der Energiespeicher ausgebildet, die elektrische Energie zu speichern. Dies hat den Vorteil, dass die übertragene und empfangene Energie dem Energiespeicher zugeführt werden kann und dort gespeichert werden kann.

Die elektrische Energie wird dabei in einem geeigneten Energiespeicher, insbesondere Akkumulator oder Super-Cap, gespeichert. Dabei ist das Lichtsignal, insbesondere der optische Strahl, der Lichtquelle vorteilhafterweise so geformt, dass möglichst viel optische Energie gezielt an den Photodetektor des Sensorknotens übertragen werden kann.

In einer weiteren Weiterbildung der Erfindung ist der mindestens eine Sensorknoten ausgebildet, durch die elektrische Energie betrieben zu werden. Dies hat den Vorteil, dass der Betrieb des Sensorknotens durch elektrische Energie sichergestellt ist.

Die Wahl der Lichtquelle, insbesondere des zugehörigen emittierten Wellenlängenspektrum, der Energiedichte, die Strahlform usw., kann an die jeweilige Anwendung individuell angepasst werden. So ist insbesondere bei einem dauerhaften Betrieb des Sensorknotens eine leistungsstarke Laserdiode zu verwenden, wohingegen bei einem diskontinuierlichen Betrieb mit geringer Übertragungshäufigkeit von Daten auch eine LED verwendet werden kann.

In einer weiteren Weiterbildung der Erfindung ist die Lichtquelle als LED, Superluminescent-LED (SLED) oder Laserdiode ausgebildet.

In einer weiteren Weiterbildung der Erfindung charakterisieren die definierten optischen Eigenschaften das Lichtsignal hinsichtlich Wellenlänge, Wellenlängenspektrum, Energiedichte, Strahlform, Frequenz und/oder Frequenzspektrum. Dies hat den Vorteil, dass die Lichtquelle und der Photodetektor aufeinander abgestimmt werden können.

In einer weiteren Weiterbildung der Erfindung ist die Information als sicherheitsrelevante Information ausgebildet. Dies hat den Vorteil, dass die Datenübertragung für sicherheitsrelevante Information verwendet werden kann.

In einer weiteren Weiterbildung der Erfindung ist die sicherheitsrelevante Information als Einmalpasswort, Token, Zertifikat und/oder Netzwerkschlüssel ausgebildet. Dies hat den Vorteil, dass die Datenübertragung für verschiedene sicherheitsrelevante Informationen verwendet werden kann.

Die Datenübertragung, insbesondere die Kommunikation, ist unidirektional und kann physikalisch nicht in die Gegenrichtung verwendet werden. Dies erhöht zusätzlich die Sicherheit des Sensorknotennetzwerkes, da ein Sensorknoten über den Kommunikationskanal nicht auf das sicherheitsrelevante System für die Vergabe von Zertifikaten und Tokens aktiv zugreifen kann, sondern über diese Schnittstelle nur Informationen empfängt.

Damit lassen sich, ähnlich der 2-Faktor-Authentifizierung bei Online-Banking, über eine unidirektionale Schnittstelle sicherheitsrelevante Informationen (Einmalpasswörter, Tokens, Zertifikate, Netzwerkschlüssel) an den Sensorknoten übertragen.

In einer weiteren Weiterbildung der Erfindung weisen die Daten der technischen Anlage und/oder des technischen Gerätes Vibrationen, Erschütterungen, Fertigungsergebnisse, Temperaturen, optische Daten, Magnetfeld, Längen, Gewichte, Winkelgeschwindigkeiten und/oder Feuchtigkeitswerte auf. Der mindestens eine Sensorknoten ist somit ausgebildet die Daten dieser Form zu messen. Dies hat den Vorteil, dass das Sensorknotennetz die technische Anlage und/oder das technische Gerät überwachen kann.

Die Erfindung umfasst außerdem ein Verfahren zur Übertragung einer Information in einem Sensorknotennetzwerk. Das Sensorknotennetzwerk ist dabei ausgebildet eine technische Anlage und/oder ein technisches Gerät zu überwachen.

Das Verfahren weist die folgenden Schritte auf:
- Emittieren eines Lichtsignals durch eine Lichtquelle eines Versorgungsgeräts, wobei das Lichtsignal durch definierte optische Eigenschaften charakterisiert ist, wobei die optischen Eigenschaften die Information codieren,
- Detektieren des Lichtsignals durch einen Photodetektor, wobei der Photodetektor von mindestens einem Sensorknoten des Sensorknotennetzwerks aufgewiesen wird,
- Erfassen von Daten der technischen Anlage und/oder des technischen Gerätes durch den mindestens einen Sensorknoten,
- Erstellen eines digitalen Signals unter Heranziehen der optischen Eigenschaften des Lichtsignals durch eine Decodierungseinheit, wobei die Decodierungseinheit von dem mindestens einem Sensorknoten des Sensorknotennetzwerks aufgewiesen wird, wobei das digitale Signal eine decodierte Form der Information enthält.

In einer Weiterbildung der Erfindung ist derPhotodetektor als Photodiode, Solarzelle, Photowider-stand und/oder Photomultiplier ausgebildet.

In einer Weiterbildung der Erfindung ist das erfindungsgemäße Verfahren außerdem zum Betrieb eines erfindungsgemäßen Sensorknotennetzwerk ausgebildet.

Im Folgenden werden die Vorteile der Erfindung zusammengefasst. Erstens erfolgt eine drahtlose Energieversorgung ohne die klassischen Nachteile eines Energy Harvesting Systems.

Außerdem kann der Sensorknoten auf Hochspannung betrieben werden, da keine drahtgebundene Energieversorgung bzw. Kommunikation notwendig sind. Zusätzlich entfällt der zyklische Austausch von Batterien.

Ähnlich der 2-Faktor-Authentifizierung bei Online-Banking können zudem über eine zweite, unidirektionale Schnittstelle sicherheitsrelevante Informationen (Einmalpasswörter, Tokens, Zertifikate, Netzwerkschlüssel) an den Sensorknoten übertragen werden. Somit erfolgt eine gesicherte optische Datenübertragung durch Verwendung von Verschlüsselungsmethoden bei der Übertragung von sicherheitsrelevanten Informationen.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines Sensorknotennetzwerkes zur Überwachung einer technischen Anlage und/oder eines technischen Gerätes und
- Fig. 2: ein Ablaufdiagramm des erfindungsgemäßen Verfahrens zur Übertragung einer Information in einem Sensorknotennetzwerk.

### DETAILLIERTE BESCHREIBUNG DER ERFINDUNG

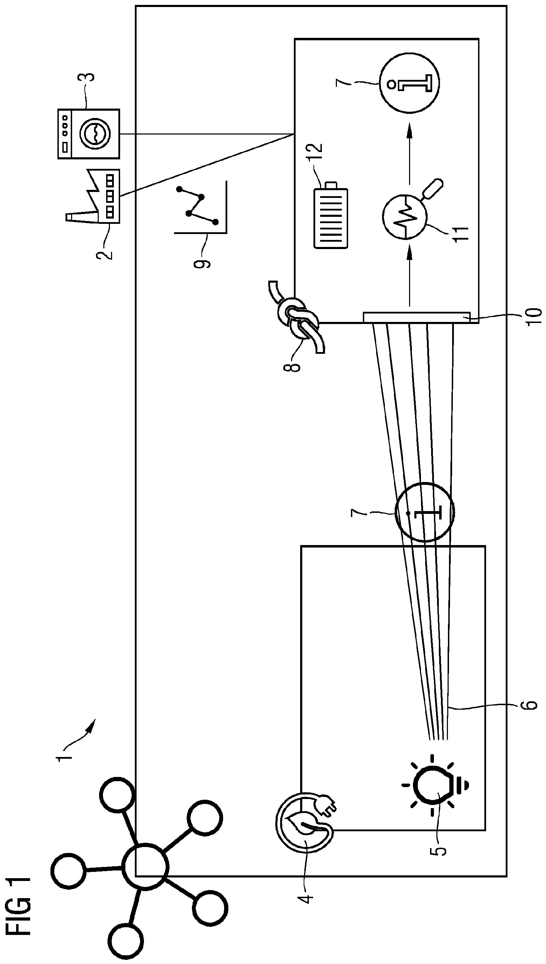

Fig. 1 zeigt eine schematische Darstellung eines Sensorknotennetzwerkes 1 zur Überwachung einer technischen Anlage 2 und/oder eines technischen Gerätes 3.

Das Sensorknotennetzwerk 1 weist ein Versorgungsgerät 4, wobei das Versorgungsgerät 4 eine Lichtquelle 5 aufweist, wobei die Lichtquelle 5 ausgebildet ist, ein Lichtsignal 6 zu emittieren, wobei das Lichtsignal 6 durch definierte optische Eigenschaften charakterisiert ist, wobei die optischen Eigenschaften eine Information 7 codieren, auf.

Das Sensorknotennetzwerk 1 weist außerdem mindestens einen Sensorknoten 8 auf, wobei der der Sensorknoten 8 ausgebildet ist, Daten 9 der technischen Anlage 2 und/oder des technischen Gerätes 3 zu erfassen, wobei der mindestens eine Sensorknoten 8 einen Photodetektor 10 aufweist, wobei der Photodetektor 10 ausgebildet ist, das Lichtsignal 6 zu detektieren, wobei der mindestens eine Sensorknoten 8 eine Decodierungseinheit 11 aufweist, wobei die Decodierungseinheit 11 ausgebildet ist unter Heranziehen der optischen Eigenschaften des Lichtsignals 6 ein digitales Signal zu erstellen, wobei das digitale Signal eine decodierte Form der Information 7 enthält.

Das Versorgungsgerät 4 ist außerdem ausgebildet, den mindestens einen Sensorknoten 8 mit optischer Energie zu versorgen.

Der mindestens eine Sensorknoten 8 weist außerdem einen Energiespeicher 12 auf, wobei der mindestens eine Sensorknoten 8 ausgebildet ist die optische Energie in elektrische Energie umzuwandeln, wobei der Energiespeicher 12 ausgebildet ist, die elektrische Energie zu speichern, wobei der mindestens eine Sensorknoten 8 ausgebildet ist, durch die elektrische Energie betrieben zu werden.

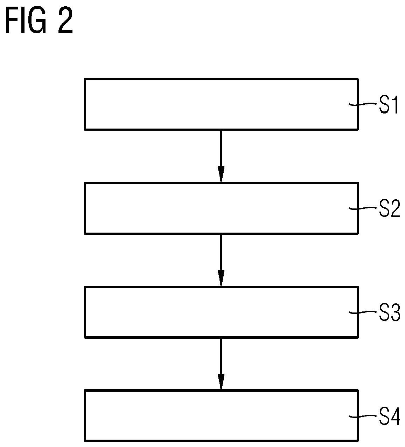

Fig. 2 ein Ablaufdiagramm des erfindungsgemäßen Verfahrens zur Übertragung einer Information 7 in einem Sensorknotennetzwerk 1, wobei das Sensorknotennetzwerk 1 eine technische Anlage 2 und/oder ein technisches Gerät 3 überwacht.

Das Verfahren weist die folgenden Schritte auf:
- Schritt S1: Emittieren eines Lichtsignals 6 durch eine Lichtquelle 5 eines Versorgungsgeräts 4, wobei das Lichtsignal (6) durch definierte optische Eigenschaften charakterisiert ist, wobei die optischen Eigenschaften die Information 7 codieren,
- Schritt S2: Detektieren des Lichtsignals 6 durch einen Photodetektor 10, wobei der Photodetektor 10 von mindestens einem Sensorknoten 8 des Sensorknotennetzwerks 1 aufgewiesen wird,
- Schritt S3: Erfassen von Daten 9 der technischen Anlage 2 und/oder des technischen Gerätes 3 durch den mindestens einen Sensorknoten 8,
- Schritt S4: Erstellen eines digitalen Signals unter Heranziehen der optischen Eigenschaften des Lichtsignals 6 durch eine Decodierungseinheit 11, wobei die Decodierungseinheit 11 von dem mindestens einem Sensorknoten 8 des Sensorknotennetzwerks 1 aufgewiesen wird, wobei das digitale Signal eine decodierte Form der Information 7 enthält.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Sensorknotennetzwerk (1) zur Überwachung einer technischen Anlage (2) und/oder eines technischen Gerätes (3), aufweisend:
- ein Versorgungsgerät (4), wobei das Versorgungsgerät (4) eine Lichtquelle (5) aufweist, wobei die Lichtquelle (5) ausgebildet ist, ein Lichtsignal (6) zu emittieren, wobei das Lichtsignal (6) durch definierte optische Eigenschaften charakterisiert ist, wobei die optischen Eigenschaften eine Information (7) codieren,
- mindestens einen Sensorknoten (8), ausgebildet Daten (9) der technischen Anlage (2) und/oder des technischen Gerätes (3) zu erfassen, wobei der mindestens eine Sensorknoten (8) einen Photodetektor (10) aufweist, wobei der Photodetektor (10) ausgebildet ist, das Lichtsignal (6) zu detektieren, wobei der mindestens eine Sensorknoten (8) eine Decodierungseinheit (11) aufweist, wobei die Decodierungseinheit (11) ausgebildet ist unter Heranziehen der optischen Eigenschaften des Lichtsignals (6) ein digitales Signal zu erstellen, wobei das digitale Signal eine decodierte Form der Information (7) enthält.

2. Sensorknotennetzwerk (1) nach Anspruch 1,
wobei die technische Anlage (2) als:
- eine Produktionsanlage,
- eine industrielle Anlage,
- ein Energiekraftwerk,
- eine Bearbeitungsanlage oder
- eine Fertigungsanlage
ausgebildet ist.

3. Sensorknotennetzwerk (1) nach einem der vorhergehenden Ansprüche,
wobei das technische Gerät (3) ein Produktionsmaschine, ein Fertigungsroboter, ein Fahrzeug, ein bildgebendes Gerät, ein Hörgerät oder ein Haushaltsgerät ist.

4. Sensorknotennetzwerk (1) nach einem der vorhergehenden Ansprüche,
wobei das Versorgungsgerät (4) ausgebildet ist, den mindestens einen Sensorknoten (8) mit optischer Energie zu versorgen.

5. Sensorknotennetzwerk (1) nach Anspruch 4,
wobei der mindestens eine Sensorknoten (8) einen Energiespeicher (12) aufweist.

6. Sensorknotennetzwerk (1) nach Anspruch 4 oder 5,
wobei der mindestens eine Sensorknoten (8) ausgebildet ist die optische Energie in elektrische Energie umzuwandeln.

7. Sensorknotennetzwerk (1) nach Anspruch 5 und 6,
wobei der Energiespeicher (12) ausgebildet ist, die elektrische Energie zu speichern.

8. Sensorknotennetzwerk (1) nach Anspruch 6 oder 7,
wobei der mindestens eine Sensorknoten (8) ausgebildet ist, durch die elektrische Energie betrieben zu werden.

9. Sensorknotennetzwerk (1) nach einem der vorhergehenden Ansprüche,
wobei die Lichtquelle (5) als LED, Superluminescent-LED (SLED) oder Laserdiode ausgebildet ist.

10. Sensorknotennetzwerk (1) nach einem der vorhergehenden Ansprüche,
wobei die definierten optischen Eigenschaften das Lichtsignal (6) hinsichtlich Wellenlänge, Wellenlängenspektrum, Energiedichte, Strahlform, Frequenz und/oder Frequenzspektrum charakterisieren.

11. Sensorknotennetzwerk (1) nach einem der vorhergehenden Ansprüche,
wobei die Information (7) als sicherheitsrelevante Information ausgebildet ist.

12. Sensorknotennetzwerk (1) nach Anspruch 11,
wobei die sicherheitsrelevante Information als Einmalpasswort, Token, Zertifikat und/oder Netzwerkschlüssel ausgebildet ist.

13. Sensorknotennetzwerk (1) nach einem der vorhergehenden Ansprüche,
wobei der mindestens eine Sensorknoten (8) ausgebildet ist Daten (9) der technischen Anlage (2) und/oder des technischen Gerätes (3) in Form von:
- Vibrationen,
- Erschütterungen,
- Fertigungsergebnissen,
- Temperaturen,
- optische Daten und/oder
- Feuchtigkeitswerte
zu messen.

14. Verfahren zur Übertragung einer Information (7) in einem Sensorknotennetzwerk (1), wobei das Sensorknotennetzwerk (1) eine technische Anlage (2) und/oder ein technisches Gerät (3) überwacht,
aufweisend die Schritte:
- Emittieren (S1) eines Lichtsignals (6) durch eine Lichtquelle (5) eines Versorgungsgeräts (4), wobei das Lichtsignal (6) durch definierte optische Eigenschaften charakterisiert ist, wobei die optischen Eigenschaften die Information (7) codieren,
- Detektieren (S2) des Lichtsignals (6) durch einen Photodetektor (10), wobei der Photodetektor (10) von mindestens einem Sensorknoten (8) des Sensorknotennetzwerks (1) aufgewiesen wird,
- Erfassen (S3) von Daten (9) der technischen Anlage (2) und/oder des technischen Gerätes (3) durch den mindestens einen Sensorknoten (8),
- Erstellen (S4) eines digitalen Signals unter Heranziehen der optischen Eigenschaften des Lichtsignals (6) durch eine Decodierungseinheit (11), wobei die Decodierungseinheit (11) von dem mindestens einem Sensorknoten (8) des Sensorknotennetzwerks (1) aufgewiesen wird, wobei das digitale Signal eine decodierte Form der Information (7) enthält.

15. Verfahren nach Anspruch 14 zum Betrieb eines Sensorknotennetzwerk (1) nach einem der Ansprüche 1 bis 13.
